# EUROPEAN PATENT SPECIFICATION

(11) **EP 0 800 451 B1**
(45) Date of publication and mention of the grant of the patent: **20.03.2002**
(21) Application number: 95938113.8
(22) Date of filing: 02.10.1995
(51) Int. Cl.: B31F 1/12, B32B 5/06, B32B 5/26, D02G 3/00, D21H 13/10, D21H 15/10, D21H 25/00

(54) **THERMAL BONDED, SOLVENT RESISTANT DOUBLE RE-CREPED TOWEL**
THERMISCH VERFESTIGTES, LÖSUNGSMITTELBESTÄNDIGES, DOPPELGEKREPPTES HANDTUCH
SERVIETTE CREPEE EN DEUX ETAPES, FIXEE PAR LA CHALEUR ET RESISTANTE AUX SOLVANTS

(30) Priority: 19.10.1994 US 325991
(43) Date of publication of application: 15.10.1997
(73) Proprietor: Kimberly-Clark Worldwide, Inc., Neenah, WI 54956 (US)
(72) Inventor: ANDERSON, Ralph, Boothwyn, PA 19061 (US); LARSON, Kenneth, West Chester, PA 19382 (US)
(74) Representative: DIEHL GLAESER HILTL & PARTNER
(86) International application number: US9512478
(87) International publication number: WO9612615

(56) References cited:
- US-A- 3 879 257
- US-A- 5 019 211
- US-A- 5 094 717
- US-A- 5 246 772
- US-A- 5 302 443

## Description

### Background of the Invention

### 1. Field of the Invention

This invention relates generally to unitary creped, elastomer bonded webs and, more particularly, to stable, high bulk, multi-fiber, heavy duty towels and wipers with improved wet and solvent tensile strength and improved resistance to wet collapse.

### 2. Brief Description of the Prior Art

The paper industry has developed various disposable products from paper making fibers and other fibers to serve as substitutes for conventional cloth products which are used as wipers, tissues and towels in both the home and industrial environments. It is important for these products, particularly for wipers and towels to simulate cloth both in performance and in consumer perception. Thus, generally speaking, there are certain physical properties such as softness, strength, stretch, absorbency, ability to wipe dry, bulk and abrasion resistance, which must be present depending upon the particular intended use of the specified product.

One specific example of this type of product is taught in U.S.-A-3,879,257 to Gentile, et al. Such patent discloses a method for making a unitary or single ply fibrous web having a laminate-like structure comprised of predominantly wood pulp fibers and manufactured according to a process where the web is bonded, creped, bonded again, and recreped.

Some of the properties mentioned above are generally considered to be adversely interrelated to one another. That is to say, an increase or improvement in one property will usually be accompanied by a decrease in another interrelated property. For example, an increase in web density or fiber concentration increases the ability of the web to wipe dry or to pick up moisture due to the greater capillary action of the smaller spaces between the fibers. However, the increase in closeness of the fibers decreases the spaces between the fibers available for holding moisture. Thus, there is a reduction in the total water absorbency yield (TWA) of the web.

Perhaps an even more demonstrative example of the adverse interrelation between properties is represented by the relationship between strength and softness of the web. Generally, conventional methods employed to produce soft paper necessarily result in a concomitant reduction in strength. This is because in a conventional paper product formed from an aqueous slurry, the principal source of strength comes from interfiber bonds formed by the hydrate bonding process associated with papermaking. Paper which has a heavy concentration of these papermaking bonds is generally stiff. To soften the paper, it is necessary to reduce these stiff bonds resulting in a loss of strength. Attempts to restore the strength lost by reducing the papermaking bonds have included the addition to the web of bonding materials which are capable of adding strength to a greater degree than adding stiffness to the web. One method which has been used to apply bonding materials to a web is to add the bonding material to the aqueous slurry of fibers and deposit it on the web forming surface along with the fibers. The bonding material is thus distributed evenly throughout the web avoiding the harshness which typically accompanies concentration of bonding material. However, this method has the disadvantage of reducing the absorbency of the web by filling the pores between the fibers with bonding material.

U.S.-A-4,158,594 to Becker, et al. teaches a method which reduces the harshness in the web areas where the bonding material is concentrated. The method consists of first forming a fibrous web under conditions which result in very low interfiber bonding strength. Strength is then imparted to the web by applying bonding material to one surface of the web in a fine spaced-apart pattern. The harshness in the bonded areas is reduced by tightly adhering the bonded portion of the web to a creping surface and removing the web from the creping surface with a doctor blade, thus finely creping the bonded portions to soften them. Selective creping of the bonded areas in the surface of the web creates contraction of the surfaces of the web in all directions resulting in an increase in stretch in both the machine direction and the cross-machine direction of the web. The portions of the web which have not had bonding material applied thereto are generally disrupted by the creping action resulting in an increase in bulk of the web, an increase in softness of the web, and an increase in absorbency.

U.S.-A-3,903,342 to Roberts, Jr., teaches a soft, absorbent, unitary laminate-like fibrous web and method for producing it. The method consists of forming a web through substantially planar aligned fibers, applying a bonding material to one side of the web to penetrate only part way through the web to form a first surface region having a surface bonding material and a central core region free from the surface and bonding material, applying a surface bonding material to a second surface region of the web to penetrate only through that surface region, applying a penetrating disposition of bonding material to one side of the web in a fine, spaced-apart pattern which occupies less area in the plane of the web than either of the surface bonding materials and penetrates through the central core region to connect the first and second surface regions together, and adhering the bonded portions of one surface region of the web to a creping surface in order to finely crepe those portions of the web upon creping of the web from the creping surface. The web preferably comprises principally lignocellulosic fibers like wood pulp or cotton linters used in papermaking, which are short fibers of less than 6,35 mm (1/4 inch) in length. However, longer fibers such as cotton, wool, rayon, regenerated cellulose, polyamide fibers, acrylic fibers, polyester fibers, and vinyl fibers, as well as others, may be used. The length of these other fibers may be up to about 12,7 mm (0.5 inches).

U.S.-A-5, 246,772 to Manning, teaches a laminated wiper wherein a preformed bi-component fiber web is sandwiched between air laid and wet laid webs of cellulosic fiber. The laminate is run through a pair of heated rolls, then embossed and taken to a latex application station.

The processes and webs of the above mentioned prior art are not without shortcomings. Although some of the webs combine properties of softness, strength and TWA, many will suffer from a propensity to collapse with pressure or water. In addition, many of such webs will degrade when used in combination with cleaning solvents, also leading to collapse. In other words, some of the structures rely on a cavernous plane in the middle of the sheet. This cavernous plane is what yields the sheet's bulk and TWA. However, since the cavernous plane is subject to collapse, much of the benefit of the added bulk and TWA can be quickly lost.

### Summary of the Invention

It is therefore an object of the present invention to provide an elastomer bonded towel or wiper with improved wet tensile strength, improved solvent resistance, and improved abrasion resistance.

It is a further object of the present invention to provide a wiper suitable for use in industrial, wet wipe and food service applications.

Yet another object of the present invention is to provide a wiper with improved bulk, particularly improved wet bulk through resistance to wet collapse thereby maintaining a high TWA.

Briefly stated, the foregoing and numerous other objects, features and advantages of the present invention will become readily apparent upon reading of the detailed description, claims and drawings set fort herein. These objects, features and advantages are accomplished by forming a paper web with a furnish which is made up of from about 6 to about 50% by weight of bi-component fibers having a length of from about 3,18 mm (1/8-inch) to 12,7 mm (1/2-inch) with the remainder of the furnish being lignocellulosic fiber, preferably Northern Softwood Kraft. However, the remainder of the furnish may also be made up of other lignocellulosic fibers like hardwood, CTMP, and pine. The web may be formed homogeneously or with a stratified headbox. If formed with a stratified head box, the bi-component fiber would be layered between layers of cellulosic fiber but would not necessarily be the only fiber component of the central layer. The web preferably has a basis weight in the range of from about 33.9 to about 101.7 g/m² (20-60 lb per ream of 2880 square feet) based upon bone dry fiber weight).

The web is formed with the modification of the process described in U.S.-A-3,879,257 to Gentile et al. Each surface region of the web has bonding material disposed throughout to bond the fibers into a strong network and impart abrasion resistance to both sides of the web. The central core region of the web, which if the web is formed with a stratified headbox, is made up of a substantial amount of bi-component fibers, preferably in the range of from about 20% to about 80% by weight of the central core region, and provides a relatively low density network of fibers held together at crossovers of such fibers. Bonding at the crossovers is accomplished by heating the web to the tack point of the sheath material of the bi-component fiber. Pressure from hot air impingement on the web or web tension as the web travels about a peripheral segment of a hot air through dryer drum is all that is necessary to obtain optimum bonding of the bi-component fiber. A pressure nip or hot calender roll is not required. In such manner, the central core region of the web is substantially locked into an open, low density structure providing for a high total water absorption capability (TWA) as well as a resistance to wet collapse. In addition, the interlocked bi-component central core region yields increases in the dry, wet and solvent tensile strengths of the web. Wet and dry tensile strength increases are in the range of 30% while wet bulk improvement is improved by about 25%. In addition, the interlocked, open, bi-component central core region yields a significant increase in resistance to Z-direction peel. Further, because the bi-component central core region bonding is accomplished through heating to the tack point of the sheath of the bi-component. fiber, those lignocellulosic fibers in the surface regions which contact bi-component fibers in the core region will also become bound thereto during that same heating step in the process. As such, the amount of latex needed to bond the web may be significantly reduced.

As mentioned above, the method of the present invention is to form a fibrous web having a basis weight in the range of from about 33.9 to about 101.7 g/m² (20-60 lb per ream of 2880 sq ft.)

The fibrous web is preferably formed from an aqueous slurry and is preferably deposited on a forming wire by means of a stratified head box such that the outer layers of the web are formed principally with lignocellulosic fibers and the central layer of the web is formed with bi-component fiber which preferably has a polyester core and a polyolefin sheath, such as polyethylene. Other materials such as polyamides or polyacrylics could also be used as the core material of the bi-component fiber. Bonding material, preferably latex, is applied to one surface of the web, preferably in a fine pattern of spaced portions occupying preferably from about 15% to about 60% of the surface of the web, to provide strength to the web and abrasion resistance to that surface, the bonding material being applied so that it penetrates into the web preferably from about 10% to about 60 % of the finished web product thickness. Bonding material is then applied to the second surface of the web, again in a fine pattern of spaced portions preferably occupying about 25% to about 50% of the surface area of the web to provide additional strength to the web and to provide abrasion resistance to that other surface. The bonding material is applied so that it penetrates into the web preferably from about 10% to about 60% of the finished web product thickness. The web is then adhered, particularly in those locations having bonding material applied thereto, to a hot creping surface. It is then creped from the creping surface with the doctor blade to disrupt the hydrogen-bonded pulp fibers within the web, particularly where elastomeric bonding material is not disposed, thereby increasing softness, absorbency, and bulk of the web and finely creping the bonded portions of the web to soften such portions. The web may then be creped a second time by adhering the second, uncreped surface of the web to a creping surface, the latex again serving as the bonding material for adhering the web to the creping surface. Creping the second side of the web with a doctor blade again disrupts the fibers within the web where bonding material has not been deposited, thereby increasing softness, absorbency, and bulk of the web. Further, the bonded portions of the web surface become finely creped and are thereby softened. Prior to winding of the web into parent rolls, the web is passed through ovens which cure the elastomeric bonding agent and the bi-component fibers after recrepe. The ovens heat the bi-component synthetic fibers to the tack point of the sheath of the fibers, preferably between 104,4°C (220° F). and 160°C (320° F). It is important that the tack point of the sheath of the bi-component fiber be greater than 104,4°C (220° F) as it is undesirable to have any melting of the sheath of the bi-component fibers occur on the Yankee dryer surfaces. Thus, no bonding of the core region of bi-component fibers has occurred through the creping steps with the exception of whatever latex bonding has occurred in the patterned application thereof. There will, of course, be no hydrogen bonds created in the central core region between bi-component fibers. In such manner, the creping steps yield significant bulk to the web. By oven curing the web to a temperature greater than the tack point of the sheath of the bi-component fibers, the bi-component fibers are then locked in their open, high bulk arrangement achieved through creping. In general, the pressure provided in the oven cure, by either hot air impingement or web tension on the cure can cylinder, is sufficient to effect significant bonding.

As mentioned above, the solvent resistance of the product of the present invention is considerably improved, as is wet bulk, delamination resistance, abrasion resistance, and cross direction stretch, all at a significant reduction of latex which should make the use of such wipers more acceptable when used in conjunction with detergents and solvents as there will be a reduction of the amount of latex residue. The wiper products of the present invention have not only industrial and food service applications, but further, the base web can possibly be used for personal hygiene wipes as well.

### Brief Description of the Drawings

Figure 1 is a schematic side elevation view of one form of an apparatus for performing the preferred initial steps of the method of the present invention to form the sheet material of the invention;
Figure 2 is a schematic side elevation view of a portion of one form of an apparatus for carrying out the method steps of the present invention in continuation of the steps performed by the apparatus depicted in Figure 1;
Figure 3 is a schematic side elevation view of a portion of the preferred form of an apparatus for carrying out the preferred method steps of the present invention in continuation with the method steps performed by that portion of the apparatus depicted in Figure 1;
Figure 4 is a greatly enlarged planar view of a portion of one side of the sheet material of the invention to which bonding material was applied in one form of pattern (dot pattern);
Figure 5 is a greatly enlarged planar of a portion of one side of another form of sheet material of the invention to which bonding material is applied in a second form of pattern (diamond pattern).
Figure 6 is a graph plotting the wet tensile strength per pound of basis weight of the web of the present invention versus the percentage by weight of bi-component fiber contained in the web.

### Description of the Preferred Embodiment

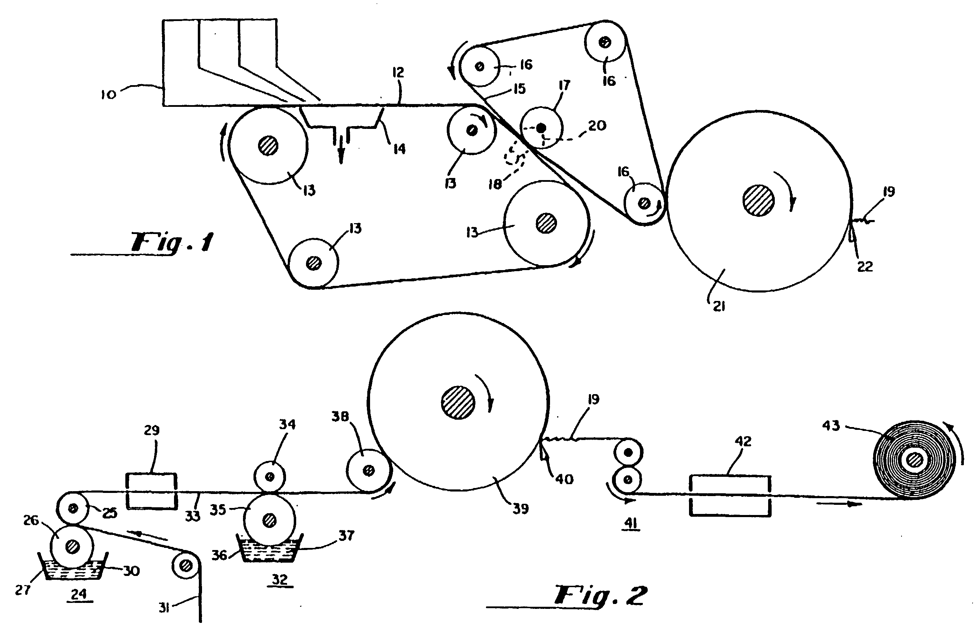

Figure 1 schematically illustrates the wet end of a papermaking machine which is capable of forming a web to which the method steps of the present invention are applied. There is a head box 10 through which a furnish or slurry of fibers is delivered to a woven forming wire 12 such as a Fourdrinier wire. The head box 10 may be structured to deliver a homogeneous furnish but, preferably, the head box 10 is so configured to deliver a stratified furnish to the forming wire 12. Delivering the furnish to the forming wire 12 creates an embryonic web which is partially dewatered by means of vacuum box 14 disposed beneath the wire 12. The wire 12 is carried through a continuous path by a plurality of guide rolls 13, at least one of which is driven by drive means (not shown). The web is then transferred to a second carrier fabric 15, which may either be a wire or a felt. This second carrier fabric 15 is similarly supported for movement through a continuous path by a plurality of guide rolls 16.

The transfer of the web from forming wire 12 to carrier wire 15 can be accomplished by lightly pressing the carrier fabric 15 into engagement with the web on the wire 12 by means of a pick up roll 17. The web transfer from the forming wire 12 to the carrier fabric 15 may be accomplished or assisted by other means such as an air knife 18 directed against the surface of forming wire 12 opposite the web, or a vacuum box 20 within the pick up roll 17, or both.

The web is then transferred from carrier fabric 15 to the surface of a rotatable heated dryer drum 21, such as a Yankee dryer. The web is lightly pressed into engagement with the surface of the dryer drum 21 to which it adheres due to its moisture content and its preference for the smoother of the two surfaces. As the web is carried by the rotation of the dryer drum 21, the heat generated in the dryer drum 21 substantially dries the web by evaporating the water contained therein. The web is then removed from the dryer surface, preferably by means of a creping blade 22.

Figures 2, 3 and 4 illustrate alternative forms of the apparatus for carrying out the remaining method steps in the present invention. Referring first to Figure 2, the web 19 creped from the surface of dryer drum 21 in Figure 1, is passed through a first bonding material application station 24. This station 24 includes a nip formed by a smooth rubber press roll 25 and a patterned metal rotogravure roll 26. The lower traverse portion of the rotogravure roll 26 is disposed in a pan 27 containing a first bonding material 30. The rotogravure roll 26 applies the bonding material 30 to one surface 31 of the web 19 in the pattern engraved on the surface of the rotogravure roll 26 as the web 19 passes through the nip. The web 19 may then be passed through a drying station 29 where the adhesive is dried or set sufficiently to prevent it from sticking to the press roll in the next bonding material application station 32 where bonding material is applied to the opposite side 33 of the web 19. The second bonding material application station 32 includes a smooth rubber press roll 34, a rotogravure roll 35 and a pan 36 containing a second bonding material 37. This second bonding material is also applied to the web 19 in a patterned arrangement. The pattern of the rotogravure roll 35 need not be the same pattern as that on rotogravure roll 26. Further, even if the two patterns are identical, it is not necessary to register the two patterns to each other.

The web 19 is then pressed into adhering contact with the creping drum surface 39 by means of a press roll 38. The second bonding material 37 causes only those portions of the web 19 where it has been disposed to adhere tightly to the creping surface 39, the web having already been dried on the surface of dryer drum 21. The web 19 is carried on the surface of the creping drum 39 and then removed therefrom by the action of creping doctor blade 40. In such creping operation, the doctor blade 40 imparts a series of fine fold lines to the portions of the web 19 which adhere to the creping surface 39. At the same time, the creping action causes the unbonded or lightly bonded fibers in the web to puff up and spread apart, forming shaped web portions having excellent softness and bulk characteristics. The extent and form of this type of crepe is controlled in part by the pattern in which the web is adhered to the creping drum 39 and the pattern of the bonding material on the opposite side 31 of the web. Preferably, the creping surface 39 is heated to increase the adhesion of the web to the drum and to dry the web. A Yankee dryer would provide a suitable creping surface.

The web 19 is then pulled from the creping doctor blade 40 through a pair of driven pull rolls 41 which control the degree of crepe by the difference in their speeds and the speeds of the creping surface. The web 19 is then passed through a curing oven 42. Curing oven 42 heats the web to a temperature above the tack point of the sheath material of the bi-component fibers. This causes the bi-component fibers in the web 19 to bond with one another wherever they contact with one another. This bonding locks the web 19, particularly the bi-component fiber portion of the web, into the high bulk structure created by the creping of web 19 from creping drum 39. Without such heat setting of the bi-component fibers to lock them into their high bulk structure, much of the bulk gained through creping would be lost as the web 19 is wound into a parent roll 43 by conventional winding means. In addition, the structure and fiber arrangement achieved through creping would be susceptible to wet collapse. The heat setting of the bi-component fibers further imparts added tensile strength to the web in that the web, whether homogeneous or stratified, includes therein a structure of interbonded bi-component fibers. Such bonds created by the melting or tackifying of the sheath material of the bi-component fiber are substantially stronger than typical papermaking bonds.

It will be recognized by those skilled in the art that various components of the apparatus depicted in Figure 2 can be rearranged and still accomplish substantially the same result. For example, the second bonding material application station 32 can be relocated from its position preceding the creping drum 39 to a position in the process after the creping drum 39. Since, in the process depicted in Figure 2, one side of web 19 is creped twice while the second side is uncreped, the timing of the adhesive application to the uncreped side of web 19 is not critical. Such an arrangement is taught in U.S.-A-3,879,257.

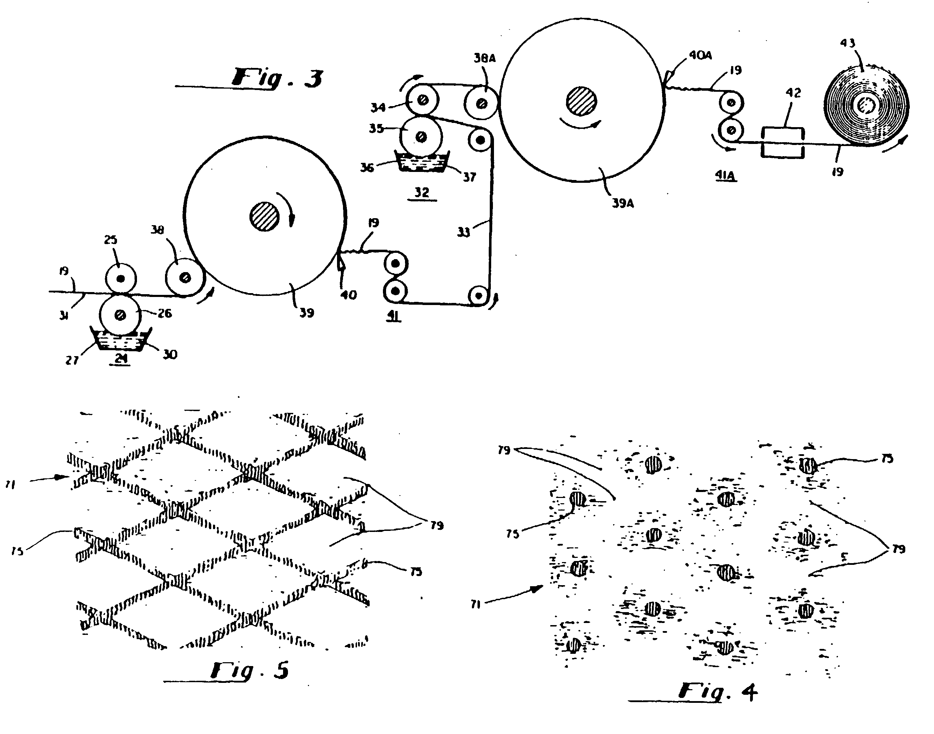

Figure 3 illustrates an apparatus for performing the preferred method steps of the invention following the formation of web 19 by that portion of the apparatus depicted in Figure 1. In Figure 3, many of the components of the apparatus depicted in there are identical to the components described in Figure 2 discussed above. As such, for purposes of brevity and simplicity, like components have been numbered identically in Figure 3 as they were in Figure 2.

The web 19 is passed through a first bonding material application station 24 where first bonding material 30 is applied to the first side 31 of the web 19 in a fine pattern corresponding to the pattern of roll 25. The web 19 is then pressed into adhering contact with the creping drum surface 39 by means of a press roll 38. The bonding material 30 causes only those portions of the web 19 where it is disposed to adhere tightly to the creping surface 39. The heat of the creping drum 39 causes the bonding material to tightly adhere the web 19 to the creping drum and to dry the web, if necessary. The web 19 is then removed from the creping drum 39 by means of a doctor blade 40, performing a first controlled pattern crepe of the web 19.

The web is pulled from the creping doctor blade 40 through a pair of driven pull rolls 41 and then is advanced about turning rolls to a second material application station 32 which includes a rubber transfer roll 34, a roll 35, and a pan 36 containing second bonding material 37. This bonding material is also applied to the web in a pattern arrangement, again not necessarily the same pattern as that applied at bonding material application station 24.

After applying the second bonding material to the web 19, the web 19 is pressed into contact with the second creping surface 39A by press roll 38A. The web 19 is carried on the surface of the second creping drum 39A for a distance and then removed therefrom by means of a second creping doctor blade 40A, thereby performing a second controlled pattern creping operation on the web 19. The web 19 is then pulled from the creping doctor blade 40A with the second set of driven pull rolls 41A and then is passed through a curing oven 42 in order to heat bond and set the bi-component fibers in their lofted structure created during the creping operation.

Preferably, as mentioned above, the web 19 of the present invention is formed in a stratified manner such that the outer layers of the web are comprised of lignocellulosic fiber of the type used conventionally in papermaking, preferably Northern Softwood Kraft. The center layer is comprised of a substantial amount of bi-component fibers, preferably of the type having a core and sheath structure where the core is polyester and the sheath is a polyolefin. The bi-component fiber content of the center layer must be sufficient to achieve the desired wet and solvent tensile strengths with enough wood pulp fibers present so as to maintain a high degree of absorbency. Preferably, the amount of bi-component fiber is in the range of from about 20% to about 80% by weight of the center layer. Those skilled in the art will recognize that there are other bi-component fiber structures which can be used in order to practice the invention other than a core and sheath configuration. Bi-component fibers can be formed with the two components residing in various side-by-side relationships as well as concentric and eccentric core and sheath configurations. For the purposes of this application the terms "core" and "sheath" are intended to include all of such known and available bi-component fiber configurations. The bi-component fiber chosen must have a tack point greater than 104,4°C (220° F). Clearly, the tack point of the sheath material of the bi-component fiber cannot be reached at the surface of the Yankee dryer. The tacking of the sheath at that location would inhibit the bulk building characteristics that are being accomplished in the creping operation. Typically, the temperature at the Yankee will be in the range of 93,3°C (200°) to 98,9°C (210° F). Further, it is important that the tack point of the bi-component fiber not be reached at the recrepe dryer oven 29. Bonding due to the tackification of the bi-component fibers at such location would again inhibit the creation of the bulk intended during the creping operation at creping drum 29. Most preferably, the sheath melt point of the bi-component fiber is in the range of 126,7°C (260°F). to 148,9°C (300°F). Thus, curing in curing oven 42 must generally take place in that same range or slightly higher, perhaps up to 176,7°C (350°F). Attaining such temperatures in the web as it passes through curing oven 42 requires air temperature in the curing oven to be in the range of from about 204,44°C (400°F) to about 260°C (500°F) depending, of course, on the speed of the web as it passes through the curing oven 42.

The bi-component fibers should have a length in the range of 3,17 mm (1/8") to 12,70 mm (1/2"). Preferably, the bi-component fibers are from about 6,35 mm (1/4") to about 9,53 mm (3/8") in length. The tex = g/km (denier) of the bi-component fiber can generally be as high as 0.56 tex (5). However, going above 0.56 tex (5 denier) will make the resultant web relatively stiff. Preferably, the bi-component fiber has a denier of approximately 0.22 (2) to 0.33 tex (3). The web should contain from about 6% to about 33% bi-component fibers by weight of dry fiber of the total web if the web is a stratified web. If the web is formed homogeneously, then the amount of bi-component fibers should preferably be in the range of from about 15% to about 50% by weight dry fiber of the total web.

Turning next to Figure 4 there is illustrated one form of sheet material of the present invention in which the bonding material is disposed in a plurality of closely spaced discrete areas. Figure 5 depicts another form of sheet material of the present invention in which the bonding material is applied in a reticular net-like pattern. Both of these figures show only one surface of the sheet 71 to which bonding material 75 has been applied, but the opposite sides of the sheet contain similar areas where bonding material has been applied. In some embodiments, it might be desirable to apply a bonding material in discrete areas on one side of the web and in a reticular net-like pattern on the other side.

As mentioned above, significant tensile strength is added to the web by means of heat setting the bi-component fibers. As a result, the amount of latex adhesive used at the latex application station can be greatly reduced. The total amount of latex used in the process can be reduced down to approximately 7.6 g/m² (4.5 lbs per ream).

The use of stratified bi-component polyester/polyethylene fiber used in the process described herein yields a wiper with substantially improved solvent resistance. Further, wet bulk and cross machine direction strength are also improved. The Table below shows these advantages.

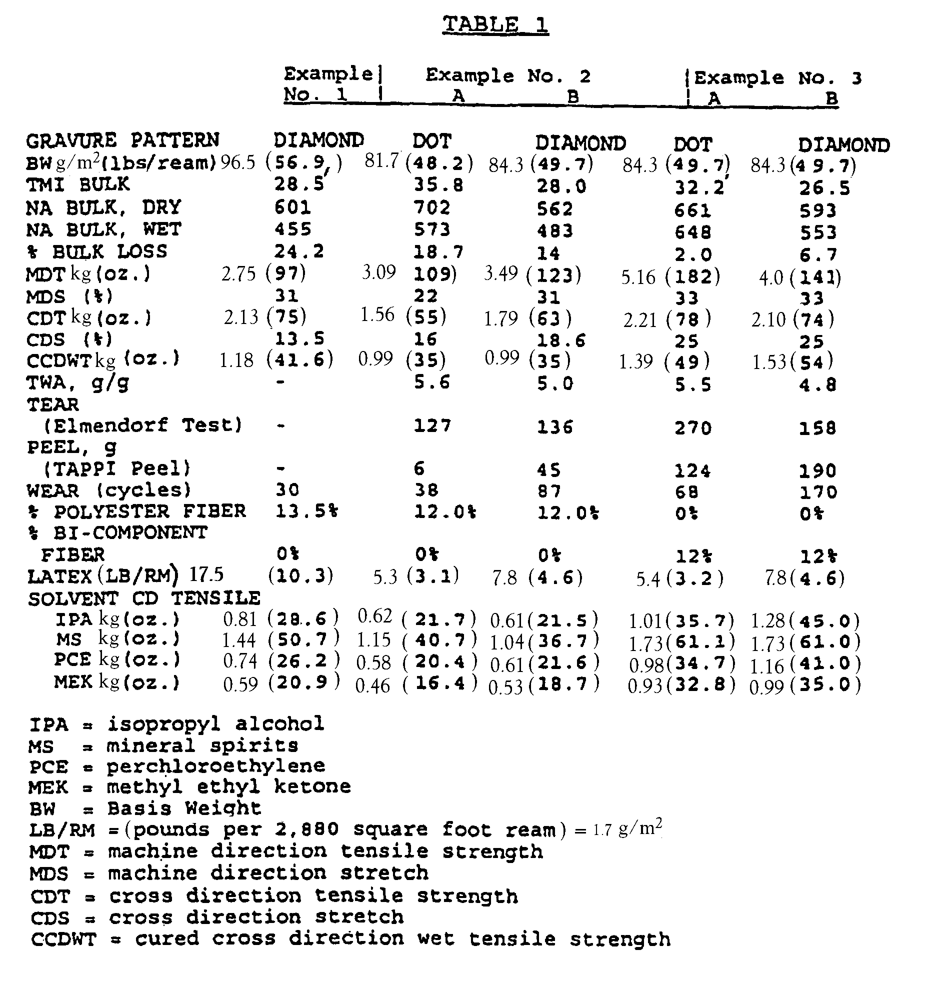

In Table 1 above, wear is determined through a test which measures the wiper product's resistance to abrasive wear. In the test, a single ply wiper is stretched over a flat plate and clamped in place. The plate is attached to an arm which is under pressure (equivalent to a large man's hand weight). The arm traverses a metal platform at a 45 degree diagonal in alternating directions. The wiper is wetted and a measured amount of an abrasive cleanser solution is a applied to the metal platform. Once the test is started, it is stopped by the operator at ten cycle intervals and the wiper surface is inspected. Once signs of wear appear, inspection is more frequent. The point of failure is that point at which the wiper is worn completely through at any point.

Example No. 1 in Table 1 above is a wiper product made in accordance with U.S.-A-3,879,257.

The web is stratified with the center layer containing both polyester and wood pulp fiber. The outside layers are 100% wood pulp fiber. The gravure pattern for application of the elastomer bonding agent (latex) was a diamond pattern as depicted in Figure 5.

Example nos. 2A and 2B are similar to the wiper product of Example no. 1. Both webs are stratified with the center layer containing both polyester and wood pulp fiber. The outside layers are 100% wood pulp fiber. The gravure pattern for application of the elastomer bonding agent (latex) for Example 2A was a dot pattern as depicted in Figure 4. The gravure pattern for application of the elastomer bonding agent (latex) for Example no. 2B was a diamond pattern identical to the gravure pattern for Example no. 1. However, the amount of latex actually applied to the web of Example nos. 2A and 2B is less than half the amount of latex applied in Example no. 1. The basis weights (BW) of Examples 2A and 2B were lower than the basis weight of Example no. 1. With lower basis weights and lower latex add-on, it is not surprising that Examples 2A and 2B exhibit a drop in cured cross direction wet tensile strength (CCDWT) and a drop in solvent cross direction wet tensile strength as compared to Example no. 1.

Example nos. 3A and 3B are webs of the present invention made with the method of the present invention. Both are stratified webs with the center layer containing both bi-component and wood pulp fiber. The bi-component fiber has a polyester core and a polyethylene sheath. The outside layers are 100% wood pulp fiber. The gravure pattern for application of the elastomer bonding agent (latex) for Example 3A was a dot pattern. The gravure pattern for application of the elastomer bonding agent (latex) for Example no. 3B was a diamond pattern, again identical to the gravure pattern for Example no. 1. The basis weights (BW) of Examples 3A and 3B were the same as the basis weight of Example no. 2B. The latex add-on for Examples 3A and 3B were substantially the same as the add-on for Examples 2A and 2B. From the Table above it can be seen that Examples 3A and 3B exhibit very significant improvement over Examples 2A and 2B when comparing the properties of machine direction tensile strength (MDT), cross direction tensile strength (CDT), cured cross direction wet tensile strength (CCDWT), peel, wear, and solvent cross direction tensile strength. In fact, the webs of Examples 3A and 3B are superior to the web of Example 1 when comparing those same properties despite having lower basis weights and lower latex add-ons.

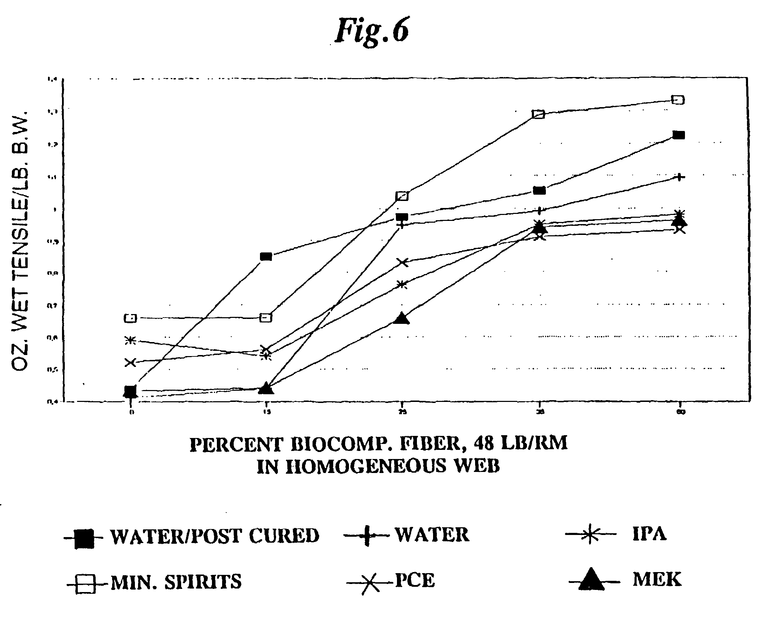

Looking at the graph of Figure 6, there is plotted the wet (water) and solvent tensile strengths per pound of basis weight versus the percentage of bi-component fiber contained in a web made with the process of the present invention. In each case the web is homogeneous. The wet and solvent tensile strengths remain relatively flat until the level of bi-component fiber reaches about 15% by weight of the total web. The wet and solvent tensile strengths then increase as the percentage of bi-component fiber increases with the wet and solvent tensile strengths beginning to level out as the percentage of bi-component fiber reaches 50% of the total weight of the web. The greatest benefit to wet and solvent tensile strengths seems to be achieved when the amount of bi-component fiber is in the range of from about 15% to about 35% of the total weight of the web. The principal exception is the wet tensile strength of the post cured web. The post cured web went through a second curing step in addition to passing through curing oven 42. The wet tensile strength of the post cured web begins to increase immediately with addition of a small percentage of bi-component fiber. In addition, the wet tensile strength of the post cured web continues to rise relatively steeply even as the percentage of bi-component fiber reaches 50% of the total weight of the web. This indicates that all of the achievable wet tensile strength and, likely the solvent tensile strength, is not being obtained with the curing oven 42. A second curing step, or a longer residence time in the curing oven should therefore achieve even greater wet and solvent tensile strengths, if desired.

Table 2 below shows that much of the benefit of the present invention can be achieved with less bi-component fiber in the web if the web is stratified with the bi-component fiber concentrated in the center or core layer. Samples A, B and C were all formed homogeneously. Samples D and E were stratified web structures with the polyester and the bi-component fiber located in the respective center layers.

**TABLE 2**

| SAMPLES | | | | | |
|---|---|---|---|---|---|
| | A | B | C | D | E |
| GRAVURE PATTERN | DOT | DOT | DOT | DOT | DOT |
| BW g/m² (lbs/ream) | 74.6(44) | 69.5(41) | 71.5(42.2) | 81.7(48.2) | 84.3(49.7) |
| MDT g (oz.)* | 53.3(1.88) | 78.8(2.78) | 94.1(3.32) | 64.1(2.26) | 103.8(3.66) |
| MDS (%) | 21 | 27 | 29 | 22 | 33 |
| CDT g (oz.)* | 25.5(0.9) | 29.8(1.05) | 45.1(1.59) | 32.3(1.14) | 44.5(1.57) |
| CDS (%) | 22 | 30 | 35 | 16 | 25 |
| CDWT g (oz.)* | 15.6(0.55) | 20.7(0.73) | 27.2(0.96) | 15.9(0.56) | 22.1(0.78) |
| CCDWT g (oz.)* | 16.7(0.59) | 24.1(0.85) | 27.8(0.98) | 20.7(0.73) | 28.1(0.99) |
| TWA, G/G | 6.75 | 6.50 | 6.0 | 5.7 | 5.5 |
| BULK | 14.4 | 14.3 | 14.1 | 12.5 | 13.3 |
| % WOOD PULP | 85% | 85% | 75% | 85% | 85% |
| % POLYESTER | 15% | 0% | 0% | 15% | 0% |
| % BI-COMPONENT | 0% | 15% | 25% | 0% | 15% |

| FIBER tex | | | | | |
|---|---|---|---|---|---|
| BI-COMPONENT | - | 0.22 | 0.22 | - | 0.22 |
| POLYESTER | 0.17 | - | - | 0.17 | - |

| SOLVENT CD TENSILE | | | | | |
|---|---|---|---|---|---|
| IPA g (oz.)* | 16.7(0.59) | 15.3(0.54) | 21.3(0.75) | 12.8(0.45) | 20.4(0.72) |
| MS g (oz.)* | 18.7(0.66) | 18.7(0.66) | 29.5(1.04) | 23.8(0.84) | 34.9(1.23) |
| PCE g (oz.)* | 14.7(0.52) | 15.9(0.56) | 23.5(0.83) | 11.9(0.42) | 19.9(0.70) |
| MEK g (oz.)* | 12.2.(0.43) | 12.5(0.44) | 18.7(0.66) | 9.6(0.34) | 18.7(0.66) |
| IPA = isopropyl alcohol | | | | | |
| MS = mineral spirits | | | | | |
| PCE = perchloroethylene | | | | | |
| MEK = methyl ethyl ketone | | | | | |

| | | | | | |
|---|---|---|---|---|---|
| * data is normalized per 0.453 kg (pound) of basis weight (BW) | | | | | |

Comparing Samples A and B and understanding that Sample B . has a lower basis weight, it can be seen that the listed properties are generally very slightly improved by using bi-component fiber as opposed to polyester. These benefits are the result of heat setting the web structure in the cure oven. By way of example, the cross direction wet tensile strength (CDWT) of Sample B falls from 20,7 g (0.73 oz) to 12,47 g (0.44 oz) when that same web is made with the cure oven turned off. Sample C shows that the properties are greatly improved over those of Sample B by increasing the bi-component fiber content to 25% by weight of the total fiber in the web. Samples B and E are the same with regard to fiber content. Each contains only 15% by weight bi-component fiber and 85% wood pulp fiber. However, the properties of Sample E are similar to those of Sample C which contains 25% bi-component fiber. The increase in machine direction, cross direction, solvent and wet tensile strengths is the result of stratifying the web such that the bi-component fiber is concentrated in the center or core layer. Again, these benefits are the result of heat setting the web structure in the cure oven. The cross direction wet tensile strength (CDWT) of Sample E falls from 22,11 g (0.78 oz) to 10,77 g (0.38 oz) when that same web is made with the cure oven turned off. Each of the samples presented in Table 2 went through a curing step in addition to passing through the cure oven 42. The additional curing step was in each case, an additional 3 minutes at a temperature of 148,9°C (300°F). The data for cured cross direction wet tensile strength (CCDWT) indicates that the maximum web strength is not being reached in the cure oven 42.

From the foregoing, it will be seen that this invention is one well adapted to attain all of the ends and objects hereinabove set forth together with other advantages which are apparent and which are inherent to the product and process.

As many possible embodiments may be made of the invention without departing from the scope thereof, it is to be understood that all matter herein set forth or shown in the accompanying drawings is to be interpreted as illustrative and not in a limiting sense.

## Claims

1. A fibrous web formed from a furnish of both lignocellulosic fibers and bi-component fibers, said fibrous web having a basis weight in the range of from about 33.9 to about 101.7 g/m² (20-60 lb per ream), said fibrous web having two substantially planar surfaces, said fibrous web having had bonding material applied in at least one pattern to each of said surfaces, and said fibrous web having been creped at least twice from a creping surface, said fibrous web comprising:
(a) lignocellulosic fibers making up from about 50% to about 94% by weight of said fibrous web;
(b) bi-component fibers of polyester and polyolefin making up from about 6% to about 50% by weight of said fibrous web, said fibrous web having an undulating disposition due to creping and having first and second strong, abrasion resistant, laminate-like surface regions interconnected by an absorbent central core region, the central core region having a de-densified structure as compared to surface regions as a result of creping, said bi-component fibers being tack bonded to one another at the points of contact with one another to set the de-densified structure of the central core region thereby making the fibrous web resistant to wet collapse.

2. A fibrous web as recited in claim 1 wherein:
said fibrous web was formed from a stratified headbox such that the central core region is formed substantially from said bi-component fibers and wherein said bi-component fibers make up from about 6% to about 33% by weight of said fibrous web.

3. A fibrous web formed from a furnish of both lignocellulosic fibers and bi-component fibers, said fibrous web having a basis weight in the range of from about 33.9 to about 101.7 g/m² (20-60 lb per ream), said fibrous sheet web having had bonding material applied in at least one pattern to each surface thereof, and said fibrous web having been creped at least twice from a creping surface, said fibrous web as recited in claim 1 wherein:
said fibrous web is formed from a homogeneous furnish and said bi-component fibers comprise a polyester core and a polyolefin sheath, the polyolefin having a melting point in the range of from about 104.4°C (220°F) to about 148.9°C (300°F).

4. A fibrous web as defined in claim 3, the polyolefin having a melting point in the range of from about 126.7°C (260°F) to about 148.9°C (300°F).

5. A fibrous web as recited in claim 3 wherein:
said polyolefin sheath is polyethylene.

6. A fibrous web as recited in claim 1 wherein:
said bi-component fibers of polyester and polyethylene make up from about 15% to about 35% by weight of said fibrous web.

7. A method for making a fibrous web having a basis weight in the range of from about 33.9 to about 101.7 g/m² (20-60 lb per ream) the method comprising the steps of:
(a) forming a web containing lignocellulosic fibers making up from about 50% to about 94% of the dry weight of the fiber content of said web, and bi-component fibers of polyester and polyolefin making up from about 6% to about 50% of the dry weight of the fiber content of said web;
(b) applying a bonding material in a pattern to a first side of the web;
(c) adhering the first side of the web to a first heated creping surface;
(d) creping the web from said first heated creping surface;
(e) applying a bonding material in a pattern to a second side of the web;
(f) adhering the second side of the web to a second heated creping surface;
(g) creping the web from said first heated creping surface, said creping steps forming a de-densified central core region in said web;
(h) heating the web to a temperature above the tack point of the bi-component fibers to bond said bi-component fibers to one another and thereby stabilize said de-densified central core region so that said central core region is resistant to wet collapse.

8. A method for making a fibrous web as recited in claim 7 wherein the web of step (a) is formed by depositing a furnish containing lignocellulosic fibers making up from about 50% to about 94% of the dry weight of the fiber content of said furnish, and bi-component fibers of polyester and polyolefin making up from about. 6% to about 50% of the dry weight of the fiber content of said furnish onto a forming wire to thereby form an embryonic web; and drying the web to at least 90% dry.

9. A method for making a fibrous web as recited in claim 7 wherein:
said web is stratified such that a layer of said bi-component fibers, resides between the layers of said lignocellulosic fibers.

10. A method for making a fibrous web as recited in claim 7 wherein:
the bi-component fibers comprise a polyester core and a polyolefin sheath, the polyolefin sheath having a melting point in the range of from about 104.4°C (220°F) to about 148.9°C (300°F).

11. A method for making a fibrous web as recited in claim 10 wherein:
the polyolefin sheath having a melting point in the range of from about 126.7 °C (260°F) to about 148.9°C (300°F).

12. A method for making a fibrous web as recited in claim 10 wherein:
said polyolefin sheath is polyethylene.

13. A method for making a fibrous web as recited in claim 8 wherein:
said furnish contains lignocellulosic fibers making up from about 65% to about 85% of the dry weight of the fiber content of said furnish.

14. A method for making a fibrous web as recited in claim 8 wherein:
said furnish contains lignocellulosic fibers making up from about 65% to about 85% of the dry weight of the fiber content of said furnish, and bi-component fibers of polyester and polyolefin making up from about 15% to about 35% of the dry weight of the fiber content of said furnish.

## Patentansprüche

1. Faserbahn, die aus einer Zusammensetzung aus Lignocellulosefasern und Zweikomponentenfasern gebildet ist, wobei die Faserbahn ein Flächengewicht im Bereich von etwa 33,9 bis etwa 101,7 g/m² (20 - 60 lb per ream) aufweist, wobei die Faserbahn zwei im Wesentlichen ebene Oberflächen aufweist, wobei Verbundmaterial in wenigstens einem Muster auf jeder der Oberflächen an die Faserbahn angebracht worden ist, und wobei die Faserbahn wenigstens zweimal durch eine Kreppoberfläche gekreppt wurde, wobei die Faserbahn umfasst:
a) Lignocellulosefasern, die von etwa 50 Gewichtsprozent bis etwa 94 Gewichtsprozent der Faserbahn ausmachen;
b) Zweikomponentenfasern aus Polyester und Polyolefin, die von etwa 6 Gewichtsprozent bis etwa 50 Gewichtsprozent der Faserbahn ausmachen, wobei die Faserbahn durch Kreppen eine wellenförmige Anordnung aufweist, und wobei sie erste und zweite, starke, abriebarme, laminatähnliche Oberflächenbereiche aufweist, die durch einen absorbierenden zentralen Kernbereich verbunden sind, wobei der zentrale Kernbereich, verglichen mit den Oberflächenbereichen, als Ergebnis des Kreppens eine ent-dichtete Struktur aufweist, wobei die Zweikomponentenfasern miteinander an Kontaktpunkten klebverbunden sind, um die ent-dichtete Struktur des zentralen Kernbereichs zu bestimmen, um dadurch die Faserbahn resistent gegenüber Zusammenfallen bei Nässe zu machen.

2. Faserbahn gemäß Anspruch 1, wobei:
die Faserbahn aus einem geschichteten Kopfkasten gebildet wurde, so dass der zentrale Kernbereich im Wesentlichen aus den Zweikomponentenfasern gebildet wird, und wobei die Zweikomponentenfasern von etwa 6 bis etwa 33 Gewichtsprozent der Faserbahn ausmachen.

3. Faserbahn, die aus einer Zusammensetzung aus Lignocellulosefasern und Zweikomponentenfasern gebildet ist, wobei die Faserbahn ein Flächengewicht im Bereich von etwa 33,9 bis etwa 101,7 g/m² (20 - 60 lb per ream) aufweist, wobei die Faserbahn zwei im Wesentlichen ebene Oberflächen aufweist, wobei Verbundmaterial in wenigstens einem Muster auf jeder ihrer Oberflächen an die Faserbahn angebracht worden ist, und wobei die Faserbahn wenigstens zweimal durch eine Kreppoberfläche gekreppt wurde, die Faserbahn gemäß Anspruch 1, wobei:
die Faserbahn aus einer homogenen Zusammensetzung gebildet ist, und wobei die Zweikomponentenfasern einen Polyesterkern und eine Polyolefinhülle umfasst, wobei das Polyolefin einen Schmelzpunkt im Bereich von etwa 104°C (220°F) bis etwa 148°C (300°F) aufweist.

4. Faserbahn gemäß Anspruch 3, wobei das Polyolefin einen Schmelzpunkt im Bereich von etwa 126°C (260°F) bis etwa 148°C (300°F) aufweist.

5. Faserbahn gemäß Anspruch 3, wobei:
die Polyolefinhülle Polyethylen ist.

6. Faserbahn gemäß Anspruch 1, wobei:
die Zweikomponentenfasern aus Polyester und Polyethylen von etwa 15 bis etwa 35 Gewichtsprozent der Faserbahn ausmachen.

7. Verfahren zur Herstellung einer Faserbahn mit einem Flächengewicht im Bereich von etwa 33,9 bis etwa 101,7 g/m² (20-60 lb per ream), wobei das Verfahren die Schritte umfasst:
a) Bilden einer Bahn enthaltend Lignocellulosefasern, die zwischen etwa 50 % und 94 % des Trockengewichts des Fasergehalts der Bahn ausmachen, und Zweikomponentenfasern aus Polyester und Polyolefin, die von etwa 6 % bis etwa 50 % des Trockengewichts des Fasergehalts der Bahn ausmachen;
b) Aufbringen eines Verbundmaterials in einem Muster auf eine erste Seite der Bahn;
c) Ankleben der ersten Seite der Bahn auf eine erste erwärmte Kreppoberfläche;
d) Kreppen der Bahn von der ersten erwärmten Kreppoberfläche;
e) Anbringen eines Verbundmaterials in einem Muster auf eine zweite Seite der Bahn;
f) Ankleben der zweiten Seite der Bahn auf eine zweite erwärmte Kreppoberfläche;
g) Kreppen der Bahn von der ersten erwärmten Kreppoberfläche, wobei die Schritte des Kreppens einen ent-dichteten, zentralen Kernbereich in der Bahn bilden;
h) Erwärmen der Bahn auf eine Temperatur über dem Klebepunkt der Zweikomponentenfasern, um die Zweikomponentenfasern miteinander zu verbinden, und dadurch den ent-dichteten Kernbereich zu stabilisieren, so dass der zentrale Kernbereich resistent gegenüber Zusammenfallen bei Nässe ist.

8. Verfahren zur Herstellung einer Faserbahn gemäß Anspruch 7, wobei die Bahn von Schritt a) durch Absetzen einer Zusammensetzung umfassend Lignocellulosefasern, die von etwa 50 % bis etwa 94 % des Trockengewichts des Fasergehalts der Zusammensetzung ausmachen, und Zweikomponentenfaser aus Polyester und Polyolefin, die zwischen etwa 6 % und 50 % des Trockengewichts des Fasergehalts der Zusammensetzung ausmachen, auf einen Bildungsdraht, um dadurch eine embryonale Bahn zu bilden; und Trocknen der Bahn bis zu einer Trockenheit von 90 %.

9. Verfahren zur Herstellung einer Faserbahn gemäß Anspruch 7, wobei:
die Bahn geschichtet ist, so dass eine Lage der Zweikomponentenfasern zwischen den Lagen der Lignocellulosefasern liegt.

10. Verfahren zur Herstellung einer Faserbahn gemäß Anspruch 7, wobei:
die Zweikomponentenfasern einen Polyesterkern und eine Polyolefinhülle umfassen, wobei die Polyolefinhülle einen Schmelzpunkt im Bereich von etwa 104°C (220°F) bis etwa 148°C (300°F) aufweist.

11. Verfahren zur Herstellung einer Faserbahn gemäß Anspruch 10, wobei:
die Polyolefinhülle einen Schmelzpunkt im Bereich von etwa 126°C (260°F) bis etwa 148°C (300°F) aufweist.

12. Verfahren zur Herstellung einer Faserbahn gemäß Anspruch 10, wobei:
die Polyolefinhülle Polyethylen ist.

13. Verfahren zur Herstellung einer Faserbahn gemäß Anspruch 8, wobei:
die Zusammensetzung Lignocellulosefasern umfasst, die zwischen etwa 65 % und 85 % des Trockengewichts des Fasergehalts der Zusammensetzung ausmachen.

14. Verfahren zur Herstellung einer Faserbahn gemäß Anspruch 8, wobei:
die Zusammensetzung Lignocellulosefasern umfasst, die zwischen etwa 65 % und 85 % des Trockengewichts des Fasergehalts der Zusammensetzung ausmachen, und Zweikomponentenfaser aus Polyester und Polyolefin, die zwischen etwa 15 % und 35 % des Trockengewichts des Fasergehalts der Zusammensetzung ausmachen.

## Revendications

1. Nappe fibreuse formée à partir d'une composition de fabrication contenant à la fois des fibres lignocellulosiques et des fibres à bicomposant, ladite nappe fibreuse ayant un poids de base compris dans la gamme allant d'.environ 33,9 à environ 101,7 g/m² (20-60 livres par rame), ladite nappe fibreuse ayant deux surfaces sensiblement planes, ladite nappe fibreuse ayant eu un matériau liant appliqué selon au moins un tracé sur chacune de ses surfaces, et ladite nappe fibreuse ayant été crêpée au moins deux fois depuis une surface de crêpage, ladite nappe fibreuse comprenant :
(a) des fibres lignocellulosiques réalisant d'environ 50% à environ 94% en poids de ladite nappe fibreuse ;
(b) des fibres à bicomposant de polyester et de polyoléfine réalisant d'environ 6% à environ 50% en poids de ladite nappe fibreuse, ladite nappe fibreuse ayant une disposition ondulante due au crêpage et ayant une première et une seconde régions de surface fortes, résistant à l'abrasion et semblables à celles d'un stratifié, interconnectées par une région de noyau central absorbant, la région de noyau central ayant, par suite du crêpage, une structure dé-densifiée par comparaison aux régions de surface, lesdites fibres à bicomposant étant liées, par effet de collage, l'une à l'autre en leurs points de contact, pour fixer la structure dé-densifiées de la région de noyau central, rendant ainsi la nappe fibreuse résistante à l'affaissement à l'état humide.

2. Nappe fibreuse selon la revendication 1, qui est formée depuis une caisse d'arrivée stratifiée, telle que la région de noyau central est formée sensiblement à partir desdites fibres à bicomposant, lesdites fibres à bicomposant réalisant d'environ 6% à environ 33% en poids de ladite nappe fibreuse.

3. Nappe fibreuse formée à partir d'une composition de fabrication contenant à la fois des fibres lignocellulosiques et des fibres à bicomposant, ladite nappe fibreuse ayant un poids de base compris dans la gamme allant d'environ 33,9 à environ 101,7 g/m² (20-60 livres par rame), ladite nappe fibreuse ayant eu un matériau liant appliqué selon au moins un tracé sur chacune de ses surfaces, et ladite nappe fibreuse ayant été crêpée au moins deux fois depuis une surface de crêpage, ladite nappe fibreuse étant selon la revendication 1, dans laquelle :
ladite nappe fibreuse est formée à partir d'une composition de fabrication homogène et lesdites fibres à bicomposant sont constituées d'un noyau de polyester et d'une gaine de polyoléfine, la polyoléfine ayant un point de fusion compris dans la gamme allant d'environ 104°C (220°F) à environ 148°C (300°F).

4. Nappe fibreuse selon la revendication 3, dans laquelle la polyoléfine a un point de fusion compris dans la gamme allant d'environ 126°C (260°F) à environ 148°C (300°F).

5. Nappe fibreuse selon la revendication 3, dans laquelle :
ladite gaine de polyoléfine est en polyéthylène.

6. Nappe fibreuse selon la revendication 1, dans laquelle :
lesdites fibres à bicomposant de polyester et de polyéthylène réalisent d'environ 15% à environ 35% en poids de ladite nappe fibreuse.

7. Procédé de fabrication d'une nappe fibreuse ayant un poids de base compris dans la gamme allant d'environ 33,9 à environ 101,7 g/m² (20-60 livres par rame), ledit procédé comprenant les étapes suivantes :
(a) la formation d'une nappe contenant des fibres lignocellulosiques réalisant d'environ 50% à environ 94% du poids sec des fibres contenues dans ladite nappe, et de fibres à bicomposant de polyester et de polyoléfine réalisant d'environ 6% à environ 50% du poids sec des fibres contenues dans ladite nappe ;
(b) l'application d'un matériau liant selon un tracé à une première face de la nappe ;
(c) le collage de la première face de la nappe sur une première surface de crêpage chauffée ;
(d) le crêpage de la nappe à partir de ladite première surface de crêpage chauffée ;
(e) l'application d'un matériau liant selon un tracé à une seconde face de la nappe ;
(f) le collage de la seconde face de la nappe sur une seconde surface de crêpage chauffée ;
(g) le crêpage de la nappe à partir de ladite seconde surface de crêpage chauffée, lesdites étapes de crêpage formant une région de noyau central dé-densifiée dans ladite nappe ;
(h) le chauffage de la nappe à une température supérieure au point d'adhésivité des fibres à bicomposant pour lier lesdites fibres à bicomposant l'une à l'autre et ainsi stabiliser ladite région de noyau central dé-densifiée, de telle sorte que ladite région de noyau central soit résistante à l'affaissement à l'état humide.

8. Procédé de fabrication d'une nappe fibreuse selon la revendication 7, dans lequel la nappe de l'étape (a) est formée par dépôt, sur une toile de formation, d'une composition de fabrication contenant des fibres lignocellulosiques réalisant d'environ 50 % à environ 94% du poids sec des fibres contenues dans ladite composition, et des fibres à bicomposant de polyester et de polyoléfine réalisant d'environ 6% à environ 50% du poids sec des fibres contenues dans ladite composition, pour former ainsi une nappe embryonnaire, et par séchage de la nappe jusqu'à ce qu'elle soit sèche à au moins 90%.

9. Procédé de fabrication d'une nappe fibreuse selon la revendication 7, dans lequel :
ladite nappe est stratifiée de telle sorte qu'une couche desdites fibres à bicomposant soit située entre les couches desdites fibres lignocellulosiques.

10. Procédé de fabrication d'une nappe fibreuse selon la revendication 7, dans lequel :
les fibres à bicomposant sont constituées d'un noyau de polyester et d'une gaine de polyoléfine, la gaine de polyoléfine ayant un point de fusion compris dans la gamme allant d'environ 104°C (220°F) à environ 148°C (300°F).

11. Procédé de fabrication d'une nappe fibreuse selon la revendication 10, dans lequel :
la gaine de polyoléfine a un point de fusion compris dans la gamme allant d'environ 126°C (260°F) à environ 148°C (300°F).

12. Procédé de fabrication d'une nappe fibreuse selon la revendication 10, dans lequel :
ladite gaine de polyoléfine est en polyéthylène.

13. Procédé de fabrication d'une nappe fibreuse selon la revendication 8, dans lequel :
ladite composition de fabrication contient des fibres lignocellulosiques réalisant d'environ 65% à environ 85% du poids sec des fibres contenues dans ladite composition.

14. Procédé de fabrication d'une nappe fibreuse selon la revendication 8, dans lequel :
ladite composition de fabrication contient des fibres lignocellulosiques réalisant d'environ 65% à environ 85% du poids sec des fibres contenues dans ladite composition, et des fibres à bicomposant de polyester et de polyoléfine réalisant d'environ 15% à environ 35% du poids sec des fibres contenues dans ladite composition.
